# FASCICULE DE BREVET EUROPEEN

(11) **EP 2 783 097 B1**
(45) Date de publication et mention de la délivrance du brevet: **27.04.2016**
(21) Numéro de dépôt: 12806533.1
(22) Date de dépôt: 19.11.2012
(51) Int. Cl.: F02M 26/66, F02M 26/60

(54) **VANNE DE CONTROLE POUR SYSTEME DE RECIRCULATION DES GAZ D'ECHAPPEMENT D'UN MOTEUR A COMBUSTION INTERNE**
STEUERVENTIL FÜR EIN ABGASRÜCKFÜHRUNGSSYSTEM EINES VERBRENNUNGSMOTORS
CONTROL VALVE FOR AN INTERNAL COMBUSTION ENGINE EXHAUST GAS RECIRCULATION SYSTEM

(30) Priorité: 25.11.2011 FR 1160786
(43) Date de publication de la demande: 01.10.2014
(73) Titulaire: Valeo Systèmes de Contrôle Moteur, 95800 Cergy (FR)
(72) Inventeur: LEBRASSEUR, Patrick, F-60240 Montagny en Vexin (FR); GIRARDON, Franck, F-78700 Conflans Sainte Honorine (FR); LALLEMANT, Mathieu, F-78600 Maisons-Laffitte (FR)
(74) Mandataire: Garcia, Christine
(86) Numéro de dépôt international: PCT/FR2012/052667
(87) Numéro de publication internationale: WO 2013/076412

(56) Documents cités:
- EP-A1- 2 365 196
- EP-A2- 1 362 985
- DE-A1-102008 035 553
- DE-A1-102008 059 657
- FR-A1- 2 772 429
- US-B1- 6 973 786

## Description

La présente invention concerne une vanne de contrôle de la quantité de gaz d'échappement recyclée dans un système de recirculation des gaz d'un moteur à combustion interne turbocompressé.

On connaît déjà des systèmes de recirculation des gaz d'échappement (EGR) destinés, dans les moteurs à combustion interne, à recycler une partie des gaz d'échappement à l'admission dans les cylindres du moteur à combustion interne. Un tel recyclage de gaz, généralement inertes et ne participant donc pas à la combustion, permet d'abaisser la température de combustion, ce qui a pour effet de diminuer le taux des oxydes d'azote (NOx) présents dans les gaz d'échappement et, par conséquent, de limiter la pollution occasionnée par un tel moteur.

Dans le cas d'un moteur à combustion interne équipé d'un turbocompresseur, il est connu de réaliser le recyclage des gaz d'échappement en prélevant ceux-ci entre la sortie des cylindres et une entrée d'une turbine du turbocompresseur entraînée par les gaz d'échappement du moteur à combustion interne.

De manière complémentaire, il est également connu de mettre en oeuvre ce recyclage des gaz d'échappement en prélevant ceux-ci en aval de la turbine du turbocompresseur entraînée par les gaz d'échappement du moteur à combustion interne.

Ces deux solutions de recyclage sont mises en oeuvre par des moyens distincts installés à la périphérie du moteur à combustion interne. Ceci représente un inconvénient puisqu'il est donc nécessaire de doubler un certain nombre de composants constitutifs de ces solutions. A titre d'exemple, l'implantation de ces deux solutions de recyclage impose l'emploi de deux faisceaux électriques de commande, de deux dispositifs autorisant ou interdisant la circulation de gaz d'échappement et de deux moyens de commande de ces dispositifs.

Le document EP 2365196 divulgue une vanne qui contrôle la circulation de deux flux de gaz d'échappement.

Le but de la présente invention est donc de résoudre l'inconvénient décrit ci-dessus principalement en rassemblant dans un même boîtier les dispositifs autorisant ou interdisant la recirculation de gaz d'échappement en provenance, d'une part d'un piquage réalisé entre la sortie d'échappement du moteur à combustion interne et l'entrée de la turbine entraînée par les gaz d'échappement, et d'autre part un piquage ménagé après cette turbine selon le sens de déplacement des gaz d'échappement.

L'invention a donc pour objet une vanne apte à contrôler un système de recirculation des gaz d'échappement d'un moteur à combustion interne équipé d'une turbine installée dans un circuit d'échappement du moteur à combustion interne, ladite vanne comprenant un corps permettant une circulation d'un premier flux de gaz d'échappement prélevé en amont de la turbine et une circulation d'un deuxième flux de gaz d'échappement prélevé en aval de la turbine, ladite vanne étant configurée pour contrôler la circulation du premier et du second flux de gaz d'échappement à travers ledit corps.

Selon l'invention, la vanne comprend un premier moyen apte à contrôler la circulation du premier flux de gaz d'échappement et un deuxième moyen apte à contrôler la circulation du deuxième flux d'échappement.

Le premier moyen peut être distinct du deuxième moyen, contrairement au cas où un seul moyen permet de contrôler la circulation du premier et du deuxième flux. Le premier moyen et le deuxième moyen peuvent être formés par des pièces distinctes d'un moyen à l'autre, contrairement au cas où un même piston ou un même volet permettrait selon sa position d'effectuer ce contrôle de la circulation du premier et du deuxième flux.

Le corps peut accueillir au moins en partie le premier moyen et le deuxième moyen.

Selon l'invention, le premier moyen contrôle la circulation du premier flux de gaz d'échappement par un mouvement de translation alors que le deuxième moyen contrôle la circulation du deuxième flux de gaz d'échappement par un mouvement de rotation.

Selon une autre caractéristique de l'invention, la vanne comprend un moyen d'entraînement qui commande le premier moyen et le deuxième moyen, notamment par l'intermédiaire d'un premier dispositif d'entraînement, d'un deuxième dispositif d'entraînement et d'un troisième dispositif d'entraînement intercalé entre le premier dispositif d'entraînement et le deuxième dispositif d'entraînement.

Selon encore une caractéristique de l'invention, la vanne comprend le premier dispositif d'entraînement qui entraîne en rotation le premier moyen, ce dernier imprimant au moins un mouvement de translation, et avantageusement un mouvement hélicoïdale, à un premier élément d'obturation d'une première canalisation ménagée dans le corps.

Selon encore une autre caractéristique de l'invention, il est prévu le deuxième dispositif d'entraînement qui entraîne en rotation le deuxième moyen, ce dernier imprimant un mouvement de rotation à un deuxième élément d'obturation d'une deuxième canalisation ménagée dans le corps.

Le premier dispositif d'entraînement et le deuxième dispositif d'entraînement sont configurés pour interdire une ouverture simultanée du premier élément d'obturation et du deuxième élément d'obturation.

Avantageusement, le premier moyen comprend un premier boisseau lié en rotation à un palonnier solidaire en rotation d'un arbre fixé au premier élément d'obturation, l'arbre comprenant deux extrémités engagées dans des rainures hélicoïdales ménagées sur le corps, cette dernière expression couvrant des rainures fabriquées directement dans le corps ou dans toute pièce intermédiaire solidaire du corps.

Avantageusement encore, la fermeture du premier moyen d'obturation est opérée par un premier moyen ressort.

De manière alternative ou complémentaire à la fermeture évoquée ci-dessus, l'invention prévoit que la fermeture du premier moyen d'obturation est opérée par le premier boisseau.

Selon une première caractéristique de l'invention, le premier boisseau se déplace selon un premier secteur angulaire pendant lequel il commande une fermeture du premier élément d'obturation, et selon un deuxième secteur angulaire pendant lequel le premier élément d'obturation est maintenu fermé.

Structurellement, un tel premier boisseau comprend une jupe sur laquelle est ménagée une saignée, une première tranche de la jupe délimitant la saignée agit sur le palonnier pour ouvrir le premier élément d'obturation, une deuxième tranche de la jupe délimitant la saignée agit sur l'arbre fixé au premier élément d'obturation pour fermer le premier élément d'obturation, ladite saignée comprenant une zone de dégagement du palonnier.

Selon une deuxième caractéristique de l'invention, le deuxième moyen comprend un deuxième boisseau sur une jupe duquel est ménagé un évidement, ledit évidement autorisant un déplacement en rotation du deuxième boisseau sans entrainement en rotation du deuxième élément d'obturation.

On notera enfin que la fermeture du deuxième moyen d'obturation est opérée par un deuxième moyen ressort.

Un tout premier avantage selon l'invention réside dans la suppression de l'un des composants en double tel qu'un faisceau électrique de commande, un corps ou un moyen de commande, notamment un moteur électrique, de l'un des dispositifs autorisant ou interdisant la circulation de gaz d'échappement recyclés. En conséquence, cela permet de réduire le poids des composants embarqués dans le véhicule équipé du moteur à combustion interne et de la vanne selon l'invention. Cela permet aussi de simplifier la commande du système de recyclage. Enfin, cela permet d'abaisser le coût de revient de la fonction de recyclage des gaz d'échappement.

D'autres caractéristiques, détails et avantages de l'invention ressortiront plus clairement à la lecture de la description donnée ci-après à titre indicatif en relation avec des dessins dans lesquels :
- la figure 1 est une vue schématique du système de recirculation des gaz d'un moteur à combustion interne turbocompressé incorporant la vanne selon l'invention,
- la figure 2 est une vue schématique de la vanne selon l'invention,
- la figure 3 est une vue schématique de composants constitutifs de la vanne selon l'invention,
- la figure 4 est une vue schématique de composants constitutifs de la vanne selon l'invention,
- la figure 5 est une vue schématique illustrant le déplacement relatif de ces composants placés dans une première position,
- la figure 6 est une vue schématique illustrant le déplacement relatif de ces composants placés dans une deuxième position,
- la figure 7 est une vue schématique illustrant le déplacement relatif de ces composants placés dans une troisième position,
- la figure 8 est une vue schématique illustrant le déplacement relatif de ces composants placés dans une quatrième position.

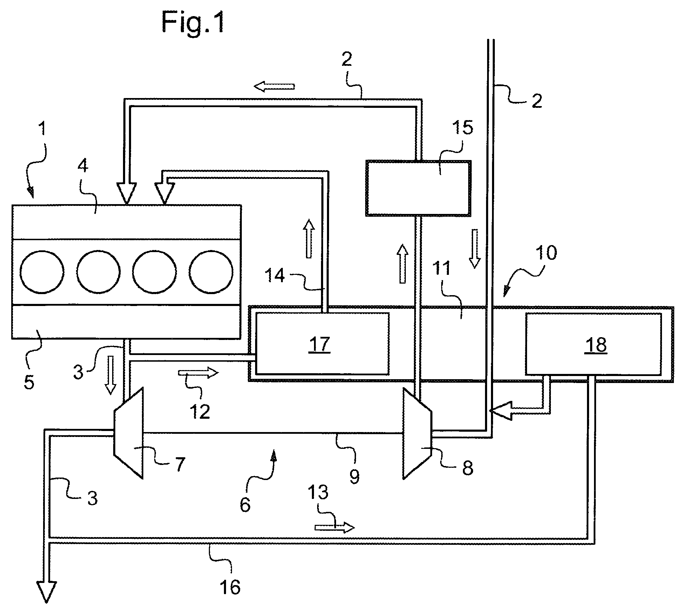

La figure 1 illustre un moteur à combustion interne 1 équipé de son circuit d'admission d'air 2 et de son circuit d'échappement 3. Ce moteur à combustion interne 1 est représenté de manière symbolique et comprend un collecteur d'amission 4 destiné à répartir le volume d'air admis dans les cylindres du moteur à combustion interne. Il comprend également un collecteur d'échappement 5 dont la fonction est de rassembler les gaz d'échappement pour les diriger vers le circuit d'échappement 3.

Ce moteur à combustion interne est encore équipé d'un turbocompresseur 6 qui comprend une turbine 7 entraînée par les gaz d'échappement, cette turbine 7 étant reliée à un compresseur 8 par un arbre 9. Le compresseur 8 est quant à lui installé dans le circuit d'admission 2 de sorte à comprimer l'air à l'admission. Entre ce compresseur 8 et le collecteur d'admission 4, on trouve un doseur d'air 15, par exemple un boîtier papillon, chargé de contrôler la quantité d'air admis dans le moteur à combustion interne 1 en fonction, notamment, de la demande du conducteur du véhicule automobile équipé dudit moteur à combustion interne.

Un tel moteur à combustion interne 1 comprend un système de recyclage des gaz d'échappement. Pour ce faire, il est prévu une vanne 10 selon l'invention adjointe au moteur à combustion interne 1. Cette vanne 10 comprend un corps 11 configuré pour contrôler une circulation d'un premier flux 12 de gaz d'échappement prélevé en amont de la turbine 7 et un deuxième flux 13 de gaz d'échappement prélevé en aval de cette même turbine 7.

Cette vanne 1 est également agencée pour, d'une part canaliser ce premier flux de gaz d'échappement 12 vers une portion du circuit d'admission 2 situé ici en aval du compresseur 8, et d'autre part canaliser ce deuxième flux 13 de gaz d'échappement vers une portion du circuit d'admission situé ici en amont du compresseur 8.

Le circuit d'échappement 3 comprend donc une conduite haute pression 14 qui débute par un piquage sur le circuit d'échappement 3 entre la sortie du collecteur d'échappement 5 et une entrée de la turbine 7. Cette conduite haute pression 14 est ensuite raccordée au corps 11 de la vanne 10 puis en ressort avant de rejoindre le circuit d'admission 2 en un point situé en aval du doseur d'air d'admission 15, avantageusement par un piquage pris sur le collecteur d'admission 4.

Le système de recyclage des gaz d'échappement comprend encore une conduite basse pression 16 qui prend sa source sur le circuit d'échappement 3 par un piquage effectué en aval de la turbine 7. Cette conduite basse pression 16 est par ailleurs raccordée au corps 11 de la vanne 10 et en ressort avant de rejoindre le circuit d'admission 2 par un piquage ménagé en amont du compresseur 8 du turbocompresseur 6.

Selon l'invention, la vanne 10 est configurée pour autoriser ou interrompre la circulation des gaz d'échappement dans la conduite haute pression 14 et dans la conduite basse pression 16. Bien entendu, la vanne 10 est agencée pour prendre toutes positions intermédiaires entre une position de fermeture totale et une position d'ouverture totale, où elle est en mesure de contrôler une quantité déterminée de gaz d'échappement qui circule dans la conduite haute pression 14 ou dans la conduite basse pression 16.

La circulation du premier flux 12 de gaz d'échappement dans la conduite haute pression 14 est placée sous la dépendance d'un premier moyen 17 qui se loge à l'intérieur du corps 11 de la vanne 10. Il en va de même pour le deuxième flux 13 de gaz d'échappement qui circule dans la conduite basse pression 16, la circulation de ce deuxième flux 13 étant placée sous la dépendance d'un deuxième moyen 18 solidarisé sur, ou installé dans, le corps 11 de la vanne 10. On comprend de ceci que le premier moyen 17 est apte à contrôler le premier flux de gaz d'échappement et le deuxième moyen 18 est apte à contrôler le deuxième flux d'échappement, le premier moyen 17 et le deuxième moyen 18 étant solidaires du corps. On notera que, en dehors de leur commande commune, ce premier moyen 17 et ce deuxième moyen 18 sont formés de pièces distinctes.

Le corps 11 de la vanne 10 forme, par exemple, une pièce monobloc et unitaire et les conduites haute pression 14 et basse pression 15 sont raccordées à ce corps 11.

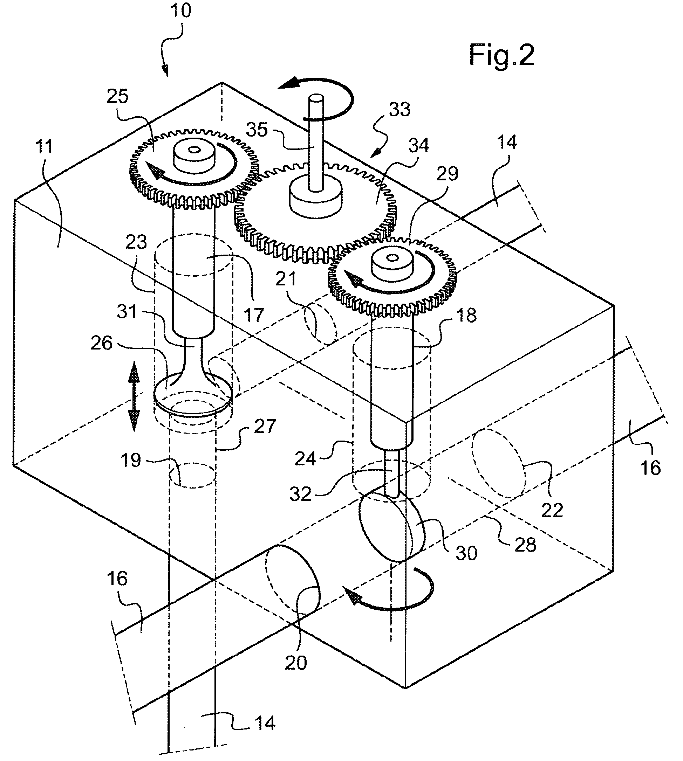

La figure 2 montre de manière détaillée la structure de la vanne 10 selon l'invention. Le corps 11 forme un bloc, par exemple réalisé en un alliage d'aluminium ou en un acier, qui présente deux entrées et deux sorties.

Une première entrée 19 est raccordée à une portion de la conduite haute pression 14 qui provient du piquage réalisé entre la sortie du collecteur d'échappement et l'entrée de la turbine, c'est-à-dire en amont de cette turbine. Une deuxième entrée 20 est réalisée sur une face du corps 11 et reçoit une portion de la conduite basse pression qui est raccordée au circuit d'échappement en aval de la turbine.

Le corps 11 comprend une première sortie 21 réalisée par exemple sur une des faces de ce corps, cette sortie étant raccordée à une portion de la conduite haute pression qui est raccordée au circuit d'admission en aval du doseur, par exemple sur le collecteur d'admission.

Le corps 11 comprend en outre une deuxième sortie 22 ménagée sur une face du corps. Cette deuxième sortie 22 est raccordée à une portion de la conduite basse pression qui canalise le deuxième flux de gaz d'échappement dans le circuit d'admission en amont du compresseur.

Le corps 11 comprend une première canalisation 27 réalisée à l'intérieur du corps 11 et raccordée d'un côté à la première entrée 19 et à la première sortie 21. Le premier moyen 17 est placé sur le parcours du premier flux de gaz d'échappement à l'intérieur de la première canalisation 27.

Le corps comprend encore une deuxième canalisation 28 ménagée à l'intérieur du corps 11 de la vanne 10. Cette deuxième canalisation 28 est raccordée à la deuxième entrée 20 et à la deuxième sortie 22, le deuxième moyen 18 étant placé sur le parcours du deuxième flux de gaz d'échappement dans la deuxième canalisation 28.

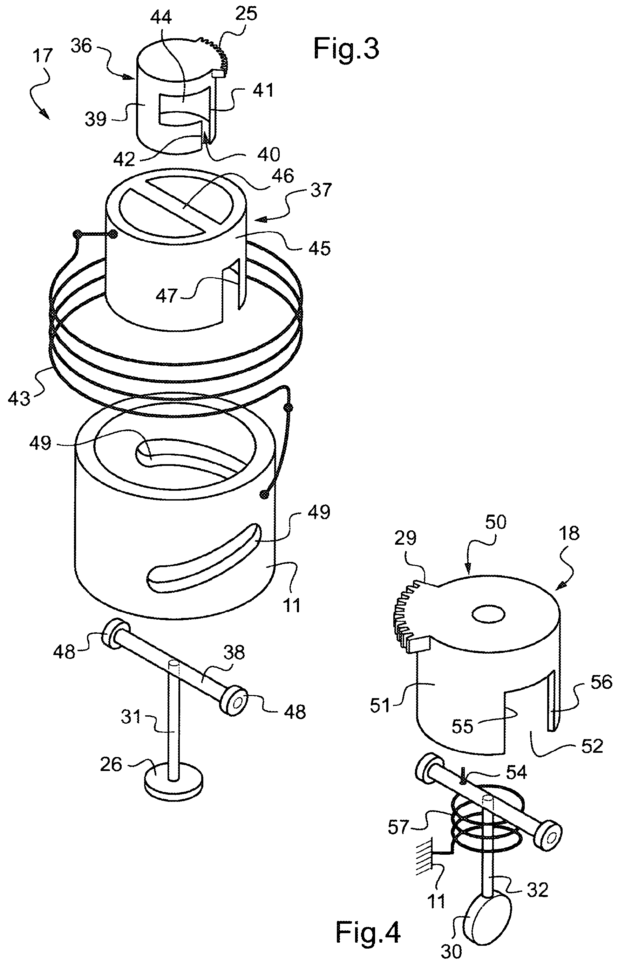

Le corps 11 comprend encore un premier logement 23, par exemple de section cylindrique, qui reçoit le premier moyen 17, ce dernier étant représenté ici de manière symbolique mais sera abordé en détails à la figure 3.

Le deuxième moyen 18 est également représenté de manière symbolique et c'est la figure 4 qui permettra d'en connaître les détails. Ce deuxième moyen 18 est néanmoins installé dans un deuxième logement 24 pratiqué dans le corps 11 de la vanne 10.

La figure 2 montre encore le type de mouvement mis en oeuvre par le premier moyen 17 ou le deuxième moyen 18 pour contrôler la circulation du premier flux et/ou du deuxième flux de gaz d'échappement.

Pour contrôler la circulation du premier flux de gaz d'échappement, le premier moyen 17 génère un mouvement de translation. Selon un exemple de réalisation, le premier moyen 17 reçoit un mouvement rotatif en provenance d'un premier dispositif d'entraînement 25 et transforme se mouvement rotatif en un mouvement de translation destiné à commander un premier élément d'obturation 26 de la première canalisation 27. A titre d'exemple, le premier élément d'obturation est une soupape qui repose sur un siège ménagé dans le corps 11, cette soupape étant relié au premier moyen 18 par une première tige 31.

Le deuxième moyen 18 contrôle la circulation du deuxième flux de gaz d'échappement dans la deuxième canalisation 28 par un mouvement de rotation. Le deuxième moyen 18 reçoit donc ce mouvement de rotation en provenance d'un deuxième dispositif d'entraînement 29, le deuxième moyen 18 agissant mécaniquement sur un deuxième élément d'obturation 30 installé dans la deuxième canalisation 28. Ce deuxième élément d'obturation 30 est formé, notamment, par un volet de type papillon relié au deuxième moyen 18 par une deuxième tige 32.

A titre d'exemple de réalisation, on notera que le premier dispositif d'entraînement 25 et le deuxième dispositif d'entraînement 29 s'étendent sur une des faces du corps 11, de manière à faciliter leurs accès. Ces deux dispositifs d'entraînement sont, par exemple, placés dans un même plan. Alternativement, ils sont placés dans des plans parallèles mais distincts.

A titre d'exemple, le premier dispositif d'entraînement 25 et le deuxième dispositif d'entraînement 29 sont formés par une roue dentée ou un engrenage.

La vanne 10 selon l'invention comprend un moyen d'entraînement 33 qui commande à la fois le premier moyen 17 et le deuxième moyen 18. On comprend ici que la vanne 10 est équipée d'un unique moyen d'entraînement pour contrôler la circulation du premier flux de gaz d'échappement et la circulation du deuxième flux de gaz d'échappement.

Le moyen d'entrainement 33 comprend un troisième dispositif d'entraînement 34 qui prend, par exemple, la forme d'une roue dentée qui engrène à la fois sur le premier dispositif d'entraînement 25 et sur le deuxième dispositif d'entraînement 29. Il peut s'agir d'une unique roue dentée mais il peut également s'agir d'une cascade de pignons permettant de réduire ou augmenter la vitesse de rotation du premier moyen 17 par rapport au deuxième moyen 18. On note que le premier moyen 17 est ainsi relié au deuxième moyen 18 par le moyen d'entraînement 33.

Le troisième dispositif d'entraînement 34 est relié à une tige d'actionnement 25 qui peut être raccordée à un actionneur électrique rapporté sur ou dans le corps 11 de la vanne 10. Il peut par exemple s'agir d'un moteur électrique, notamment à courant continu, commandé en niveau de courant.

La vanne 10 pourra être configurée pour interdire une ouverture simultanée du premier élément d'obturation 26 et du deuxième élément d'obturation 30. Le premier moyen 17 et le deuxième moyen 18 comprennent ainsi chacun des zones de dégagement ou libération où, bien que le premier dispositif d'entraînement tourne, le premier élément d'obturation ne bouge pas. Une telle cinématique sera plus apparente aux figures 3 à 8.

La figure 3 montre le détail du premier moyen 17 installé dans le corps 11 de la vanne 10.

Le premier moyen 17 comprend un premier boisseau 36 lié en rotation à un palonnier 37 solidaire en rotation d'un arbre 38 fixé au premier élément d'obturation 26.

La fonction de ce premier boisseau 36 est de contrôler la transmission du mouvement de rotation en provenance du premier dispositif d'entraînement 25 (représenté ici de manière symbolique) vers le palonnier 37. Autrement dit, le premier boisseau 36 tourne selon un premier secteur angulaire où il entraîne en rotation le palonnier 37 et selon un deuxième secteur angulaire pendant lequel le palonnier 37 est immobile.

Pour ce faire, le premier boisseau 36 comprend une jupe 39 sur laquelle est ménagée une saignée 40, cette dernière présentant une forme en « L » inversée.

Les bords de cette saignée 40 comprennent une première tranche 41 de la jupe 39 qui agit sur le palonnier 37 pour ouvrir le premier élément d'obturation 26, ce qui permet au premier flux de gaz d'échappement de circuler dans la première canalisation.

Cette saignée délimite encore une deuxième tranche 42 de la jupe 39 qui agit sur l'arbre 38 pour fermer le premier élément d'obturation 26, le cas échéant. On notera que la fermeture du premier élément d'obturation est prioritairement assurée par un premier moyen ressort 43 installé entre le corps 11 de la vanne et le palonnier 37. Le premier moyen ressort 43 agit alors sur le palonnier 37 qui agit sur l'arbre 38. La fermeture pourra également être obtenue sous l'action du premier dispositif d'entraînement 25, de façon supplémentaire à l'action du premier moyen ressort 43, pour faciliter la fermeture du premier élément d'obturation 26, notamment quand la force du premier moyen ressort ne suffit pas pour fermer cet élément d'obturation. Une telle situation apparaît, par exemple, quand des impuretés ou de la calamine gène le déplacement du premier élément d'obturation 26. La deuxième tranche 42 de la jupe 39 agit alors sur l'arbre 38, le palonnier 37 étant naturellement entraîné dans le même mouvement.

La saignée délimite enfin une zone de dégagement 44, autrement appelé fenêtre de libération, du palonnier 37. Cette zone de dégagement 44 est une portion de la saignée 40 qui autorise une rotation du premier boisseau 36 sans entraîner en rotation le palonnier 37.

Le premier boisseau 36 se déplace alors selon un premier secteur angulaire pendant lequel il est susceptible de commander la fermeture du premier élément d'obturation 26, et selon un deuxième secteur angulaire pendant lequel le premier élément d'obturation 26 est maintenu fermé. Une rotation en sens opposé entraîne, en outre, l'ouverture du premier élément d'obturation quand la première tranche 41 vient entraîner le palonnier 37.

Ce palonnier 37 est par exemple un tube cylindrique 45 qui comporte une nervure transversale 46, cette nervure passant par le centre du tube cylindrique 45. Le tube cylindrique comprend encore une fente 47 réalisée longitudinalement, c'est-à-dire selon un axe parallèle à un axe central du tube cylindrique 45.

Cette fente 47 reçoit l'arbre 38, ce dernier étant relié de manière solidaire à la première tige 31. Cet arbre 38 s'étend selon une direction perpendiculaire à la direction d'extension de la première tige 31 et comprend notamment à chacune de ses extrémités un palier 48, ce dernier pouvant par exemple être réalisé par une roue sur une liaison pivot, ou encore par un roulement.

Les extrémités de cet arbre 38, en particulier les paliers 48, sont engagées dans des rainures hélicoïdales 49 solidaires du corps 11, réalisées soit directement sur ce dernier, soit sur une une pièce intermédiaire fixée dans le corps 11. Ces rainures hélicoïdales 49 forment un chemin de came, qui entraine en translation l'élément d'obturation 26 quand l'arbre 38 est entraîné en rotation par le palonnier 37.

Le palonnier 37, les rainures hélicoïdales 49 et l'arbre 38 transforment ainsi le mouvement de rotation imprimé par le premier boisseau 36 en un mouvement de translation réversible exécuté par le premier élément d'obturation 26.

Dans cette exemple de réalisation, le moyen ressort 43 est un ressort dont les spires sont enroulées autour du palonnier 37 et dont une première extrémité est reliée au corps 11, et dont l'autre extrémité est reliée au palonnier 37.

La figure 4 montre de manière schématique la structure du deuxième moyen 18. Ce dernier est solidaire du deuxième dispositif d'entraînement 29 représenté ici de manière schématique.

Ce deuxième moyen 18 comprend un deuxième boisseau 50 constitué d'un fond et d'une jupe périphérique 51. Sur cette jupe, ou au travers de celle-ci, est ménagé un premier évidement 52 dont la fonction est d'autoriser un mouvement de rotation du deuxième boisseau sans que celui-ci n'entraîne en rotation le deuxième élément d'obturation 30. Ce premier évidement 52 prend une forme rectangulaire. Un deuxième évidement (non représenté) de forme identique au premier évidement 52 peut également être ménagé sur la jupe 51 du deuxième boisseau 50, de manière diamétralement opposée au premier évidement 52.

Le deuxième élément d'obturation 30 est solidaire de la deuxième tige 32, l'extrémité libre de cette dernière supportant un barreau transversal d'actionnement référencé 54. Ce dernier s'étend selon une direction perpendiculaire par rapport à une direction d'extension de la deuxième tige 32, celle-ci étant rendue solidaire du barreau transversal 54 sensiblement au milieu du barreau.

Au moins une extrémité, et avantageusement les deux extrémités, du barreau transversal 54 est reçue dans les premier 52 et/ou second évidements de manière à ce que les arêtes 55 ou 56 imprime un mouvement de rotation, qui se traduira par une ouverture ou une fermeture du deuxième élément d'obturation 30 de sorte à autoriser ou interdire la circulation du deuxième flux de gaz d'échappement dans la deuxième canalisation.

La fermeture du deuxième élément d'obturation est opérée par la force d'un deuxième moyen ressort 57. Ce dernier prend, par exemple, la forme d'un ressort à spirales dont une première extrémité est rendue solidaire du barreau transversal 54 alors qu'une deuxième extrémité est attachée au corps 11 de la vanne 1 selon l'invention.

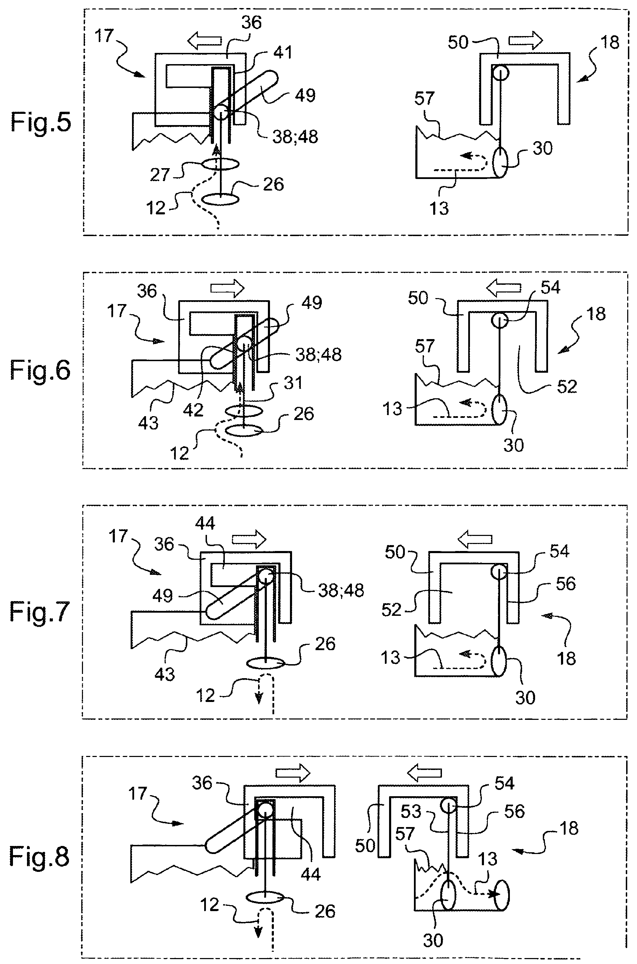

Les figures 5 à 8 illustrent les déplacements des composants constitutifs du premier moyen 17 et du deuxième moyen 18. Le premier boisseau 36 et le deuxième boisseau 50 se déplacent en rotation mais la représentation schématique employée ici est illustrée sur un plan. Ces figures montrent des couples de dessins illustrant respectivement les premier et/ou second moyens d'entrainement, prévus reliés l'un à l'autre par le moyen d'entraînement, non représenté ici. Le premier boisseau 36 et le deuxième boisseau 50 tournent simultanément, et avantageusement selon des sens opposés.

La figure 5 illustre une situation où le premier élément d'obturation 26 autorise la circulation du premier flux de gaz d'échappement dans la première canalisation 27. Le premier élément d'obturation est maintenu dans cette position d'ouverture par la première tranche 41 du premier boisseau, le palier 48 étant localisé à une première extrémité de la rainure hélicoïdale 49.

De son côté, le deuxième élément d'obturation 30 est maintenu dans une position fermée, où il interdit toute circulation du deuxième flux 13 de gaz d'échappement. Un tel maintien est opéré par la force exercée par le deuxième moyen ressort 57.

Quand la vanne reçoit une instruction de fermeture du circuit haute pression, cette instruction se traduit par le mouvement montré à la figure 6, cette dernière montrant une position intermédiaire du premier élément d'obturation 26.

Le premier boisseau 36 est mis en rotation afin d'autoriser un déplacement du palier 48 dans la rainure hélicoïdale 49. Un tel mouvement se traduit par une translation de l'ensemble constitué du premier élément d'obturation, de la première tige 31 et de l'arbre 38. Le mouvement de rotation est imprimé par la force du premier moyen ressort 43. Si, pour les raisons évoquées plus haut, cette force ne suffit pas pour entraîner la rotation, la deuxième tranche 42 exerce un effort supplémentaire sur l'arbre solidaire de la première tige 31.

Comme pour la figure 5, le deuxième élément d'obturation 30 est maintenu fermé par le deuxième moyen ressort. En revanche, le deuxième boisseau 50 se déplace en rotation mais sans agir sur le barreau transversal 54 puisque celui-ci est logé dans l'évidement 52.

La figure 7 montre la position de repos du premier moyen 17 et du deuxième moyen 18. Cette position de repos correspond à une fermeture de la première canalisation opérée par le premier élément d'obturation 26, la deuxième canalisation étant encore fermée par le deuxième élément d'obturation 30.

Le premier boisseau 36 a poursuivi son mouvement de rotation jusqu'à ce que le palier 48 atteigne une deuxième extrémité de la rainure hélicoïdale 49. A ce stade, l'arbre 38 s'étend dans la zone de dégagement 44. Le premier élément d'obturation 26 est alors maintenu fermé par le premier moyen ressort 43.

Le deuxième boisseau 50 a également continué son mouvement de rotation jusqu'à ce que le barreau transversal 54 vienne en appui contre l'arête 56 qui délimite l'évidement 52 réalisé sur le deuxième boisseau 50. Comme déjà dit, à ce stade, le deuxième élément d'obturation 50 reste néanmoins fermé.

La figure 8 montre une situation où le circuit basse pression est ouvert alors que le circuit haute pression est fermé.

La zone de dégagement 44 a permis au premier boisseau 36 de tourner sans pour autant entraîner en rotation l'arbre 38. La position du premier élément d'obturation 26 est inchangée par rapport à celle évoquée à la figure 7.

La rotation du deuxième boisseau 50 entraîne un contact entre l'arête 56 et le barreau transversal 54 qui se traduit par une mise en rotation de la deuxième tige 32, et corrélativement du deuxième élément d'obturation 30. Le deuxième moyen ressort 57 est alors contraint par la force exercée lors de la rotation du barreau transversal 54.

Les figures 5 à 8 illustrent ainsi la cinématique des différents composants du premier moyen 17 et du deuxième moyen 18, et on constate que la vanne 1 est configurée pour interdire toute ouverture simultanée du premier élément d'obturation 26 et du deuxième élément d'obturation 30. Autrement dit, le premier moyen 17 et le deuxième moyen 18 sont agencés pour autoriser la circulation du premier flux 12 de gaz d'échappement ou autoriser la circulation du deuxième flux 13 de gaz d'échappement, ceci de façon sélective.

Les termes « amont » et « aval » employés ci-dessus se réfèrent au sens de déplacement du fluide considéré, air ou gaz d'échappement, dans le composant considéré.

## Revendications

1. Vanne (10) apte à contrôler un système de recirculation des gaz d'échappement d'un moteur à combustion interne (1) équipé d'une turbine (7) installée dans un circuit d'échappement (3) du moteur à combustion interne (1), ladite vanne comprenant un corps (11) permettant une circulation d'un premier flux (12) de gaz d'échappement prélevé en amont de la turbine (7) et une circulation d'un deuxième flux (13) de gaz d'échappement prélevé en aval de la turbine (7), ladite vanne étant configurée pour contrôler la circulation du premier et du second flux de gaz d'échappement à travers ledit corps (11),
et comprenant un premier moyen (17) apte à contrôler la circulation du premier flux (12) de gaz d'échappement et un deuxième moyen (18) apte à contrôler la circulation du deuxième flux (13) de gaz d'échappement, le premier moyen (17) étant distinct du deuxième moyen (18).

2. Vanne (10) selon la revendication 1, ledit corps (11) accueillant au moins en partie le premier moyen (17) et le deuxième moyen (18).

3. Vanne selon la revendication 1 ou 2, dans laquelle le premier moyen (17) contrôle la circulation du premier flux (12) de gaz d'échappement par au moins un mouvement de translation alors que le deuxième moyen (18) contrôle la circulation du deuxième flux (13) de gaz d'échappement par un mouvement de rotation.

4. Vanne selon l'une quelconque des revendications 1 à 3, comprenant un moyen d'entraînement (33) qui commande le premier moyen (17) et le deuxième moyen (18).

5. Vanne selon l'une quelconque des revendications 1 à 4, dans laquelle un premier dispositif d'entraînement (25) entraîne en rotation le premier moyen (17), ce dernier imprimant au moins un mouvement de translation à un premier élément d'obturation (26) d'une première canalisation (27) ménagée dans le corps (11).

6. Vanne selon la revendication 5, dans laquelle un deuxième dispositif d'entraînement (29) entraîne en rotation le deuxième moyen (18), ce dernier imprimant un mouvement de rotation à un deuxième élément d'obturation (30) d'une deuxième canalisation (28) ménagée dans le corps (11).

7. Vanne selon la revendication 6, dans laquelle le premier moyen (17) et le deuxième moyen (18) sont configurés pour interdire une ouverture simultanée du premier élément d'obturation (26) et du deuxième élément d'obturation (30).

8. Vanne selon l'une quelconque des revendications 5 à 7, dans laquelle le premier moyen (17) comprend un premier boisseau (36) lié en rotation à un palonnier (37) solidaire en rotation d'un arbre (38) fixé au premier élément d'obturation (26), l'arbre (38) comprenant deux extrémités engagées dans au moins une rainure hélicoïdale (49) ménagée sur le corps (11).

9. Vanne selon l'une quelconque des revendications 5 à 8, dans laquelle la fermeture du premier moyen d'obturation (26) est opérée par un premier moyen ressort (43).

10. Vanne selon l'une quelconque des revendications 5 à 9, dans laquelle la fermeture du premier moyen d'obturation (26) est opérée par le premier boisseau (36).

11. Vanne selon la revendication 8, dans laquelle le premier boisseau (36) se déplace selon un premier secteur angulaire pendant lequel il commande une fermeture du premier élément d'obturation (26), et selon un deuxième secteur angulaire pendant lequel le premier élément d'obturation (26) est maintenu fermé.

12. Vanne selon la revendication 11, dans laquelle le premier boisseau (36) comprend une jupe (39) sur laquelle est ménagée une saignée (40), une première tranche (41) de la jupe (39) délimitant la saignée (40) agit sur le palonnier (37) pour ouvrir le premier élément d'obturation (26), une deuxième tranche (42) de la jupe (39) délimitant la saignée (40) agit sur l'arbre (38) pour fermer le premier élément d'obturation (26), ladite saignée (40) comprenant une zone de dégagement (44) du palonnier (37).

13. Vanne selon l'une quelconque des revendications 6 ou 7, dans laquelle le deuxième moyen (18) comprend un deuxième boisseau (50) sur une jupe (51) duquel est ménagé au moins un premier évidement (52), ledit premier évidement (52) autorisant un déplacement en rotation du deuxième boisseau (50) sans entrainement en rotation du deuxième élément d'obturation (30).

14. Vanne selon l'une quelconque des revendications 6 ou 13, dans laquelle la fermeture du deuxième moyen d'obturation (30) est opérée par un deuxième moyen ressort (57).

## Patentansprüche

1. Ventil (10), das angepasst ist, um ein Rückführsystem der Abgase eines Verbrennungsmotors (1) zu steuern, der mit einer Turbine (7) ausgestattet ist, die in einer Auspuffleitung (3) des Verbrennungsmotors (1) installiert ist, wobei das Ventil einen Körper (11) umfasst, der eine Zirkulation eines ersten Abgasstroms (12), der stromaufwärts der Turbine (7) entnommen wird, und eine Zirkulation eines zweiten Abgasstroms (13), der stromabwärts der Turbine (7) entnommen wird, erlaubt, wobei das Ventil ausgelegt ist, um die Zirkulation des ersten und des zweiten Abgasstroms durch den Körper (11) zu steuern,
und ein erstes Mittel (17) umfasst, das angepasst ist, um die Zirkulation des ersten Abgasstroms (12) zu steuern, und ein zweites Mittel (18), das angepasst ist, um die Zirkulation des zweiten Abgasstroms (13) zu steuern, wobei das erste Mittel (17) von dem zweiten Mittel (18) getrennt ist.

2. Ventil (10) nach Anspruch 1, wobei der Körper (11) das erste Mittel (17) und das zweite Mittel (18) mindestens zum Teil aufnimmt.

3. Ventil nach Anspruch 1 oder 2, wobei das erste Mittel (17) die Zirkulation des ersten Abgasstroms (12) durch mindestens eine Verschiebungsbewegung steuert, während das zweite Mittel (18) die Zirkulation des zweiten Abgasstroms (13) durch eine Drehbewegung steuert.

4. Ventil nach einem der Ansprüche 1 bis 3, das ein Antriebsmittel (33) umfasst, das das erste Mittel (17) und das zweite Mittel (18) steuert.

5. Ventil nach einem der Ansprüche 1 bis 4, wobei eine erste Antriebsvorrichtung (25) das erste Mittel (17) in Drehung antreibt, wobei dieses Letztere einem ersten Verschlusselement (26) einer ersten Kanalisation (27), die in dem Körper (11) eingerichtet ist, mindestens eine Verschiebungsbewegung auferlegt.

6. Ventil nach Anspruch 5, wobei eine zweite Antriebsvorrichtung (29) das zweite Mittel (18) in Drehung antreibt, wobei dieses Letztere einem zweiten Verschlussmittel (30) einer zweiten Kanalisation (28) die in dem Körper (11) eingerichtet ist, eine Drehbewegung auferlegt.

7. Ventil nach Anspruch 6, wobei das erste Mittel (17) und das zweite Mittel (18) ausgelegt sind, um ein gleichzeitiges Öffnen des ersten Verschlusselements (26) und des zweiten Verschlusselements (30) zu untersagen.

8. Ventil nach einem der Ansprüche 5 bis 7, wobei das erste Mittel (17) einen ersten Ventildurchgang (36) umfasst, der in Drehung mit einem Schwinghebel (37) verbunden ist, der mit einer Welle (38) drehfest ist, die an dem ersten Verschlusselement (26) befestigt ist, wobei die Welle (38) zwei Enden umfasst, die in mindestens eine helixförmige Nut (49), die auf dem Körper (11) eingerichtet ist, eingefügt sind.

9. Ventil nach einem der Ansprüche 5 bis 8, wobei das Schließen des ersten Verschlussmittels (26) durch ein erstes Federmittel (43) ausgeführt wird.

10. Ventil nach einem der Ansprüche 5 bis 9, wobei das Schließen des ersten Verschlussmittels (26) von dem ersten Ventildurchgang (36) ausgeführt wird.

11. Ventil nach Anspruch 8, wobei sich der erste Ventildurchgang (36) gemäß einem ersten Winkelsektor verlagert, in dessen Verlauf er ein Schließen des ersten Verschlusselements (26) steuert, und gemäß einem zweiten Winkelsektor, in dessen Verlauf das erste Verschlusselement (26) geschlossen gehalten wird.

12. Ventil nach Anspruch 11, wobei der erste Ventildurchgang (36) eine Schürze (39) umfasst, auf der eine Schnittfuge (40) eingerichtet ist, wobei ein erster Abschnitt (41) der Schürze (39), der die Schnittfuge (40) abgrenzt, auf den Schwinghebel (37) einwirkt, um das erste Verschlusselement (26) zu öffnen, wobei ein zweiter Abschnitt (42) der Schürze (39), der die Schnittfuge (40) abgrenzt, auf die Welle (38) einwirkt, um das erste Verschlusselement (26) zu schließen, wobei die Schnittfuge (40) einen Ausrückbereich (44) des Schwinghebels (37) umfasst.

13. Ventil nach einem der Ansprüche 6 oder 7, wobei das zweite Mittel (18) einen zweiten Ventildurchgang (50) umfasst, auf dessen Schürze (51) mindestens eine erste Aussparung (52) eingerichtet ist, wobei die erste Aussparung (52) eine Drehbewegung des zweiten Ventildurchgangs (50) ohne Antreiben in Drehung des zweiten Verschlusselements (30) gestattet.

14. Ventil nach einem der Ansprüche 6 oder 13, wobei das Schließen des zweiten Verschlussmittels (30) von einem zweiten Federmittel (57) ausgeführt wird.

## Claims

1. Valve (10) able to control an exhaust gas recirculation system of an internal combustion engine (1) equipped with a turbine (7) installed in an exhaust circuit (3) of the internal combustion engine (1), said valve comprising a body (11) allowing a circulation of a first flow (12) of exhaust gas extracted upstream of the turbine (7) and a circulation of a second flow (13) of exhaust gas extracted downstream of the turbine (7), said valve being configured to control the circulation of the first and second flows of exhaust gas through said body (11),
and comprising a first means (17) able to control the circulation of the first flow (12) of exhaust gas and a second means (18) able to control the circulation of the second flow (13) of exhaust gas, the first means (17) being separate from the second means (18).

2. Valve (10) according to Claim 1, said body (11) at least partly receiving the first means (17) and the second means (18).

3. Valve according to Claim 1 or Claim 2, **characterized in that** the first means (17) controls the circulation of the first flow (12) of exhaust gas by at least one translational movement whereas the second means (18) controls the circulation of the second flow (13) of exhaust gas by a rotational movement.

4. Valve according to any of Claims 1 to 3, comprising a drive means (33) which controls the first means (17) and the second means (18).

5. Valve according to any of Claims 1 to 4, **characterized in that** a first drive device (25) drives the first means (17) in rotation, the latter imposing at least one translational movement on a first sealing element (26) of a first duct (27) arranged in the body (11).

6. Valve according to Claim 5, **characterized in that** a second drive device (29) drives the second means (18) in rotation, the latter imposing a rotational movement on a second sealing element (30) of a second duct (28) arranged in the body (11).

7. Valve according to Claim 6, **characterized in that** the first means (17) and the second means (18) are configured to prohibit simultaneous opening of the first sealing element (26) and the second sealing element (30).

8. Valve according to any of Claims 5 to 7, **characterized in that** the first means (17) comprises a first guide case (36) linked in rotation to a lifting bar (37) which is rotationally integral with a shaft (38) fixed to the first sealing element (26), the shaft (38) comprising two ends engaged in at least one helicoidal groove (49) arranged on the body (11).

9. Valve according to any of Claims 5 to 8, **characterized in that** the closure of the first sealing means (26) is achieved by a first spring means (43).

10. Valve according to any of Claims 5 to 9, **characterized in that** the closure of the first sealing means (26) is achieved by the first guide case (36).

11. Valve according to Claim 8, **characterized in that** the first guide case (36) moves along a first angular sector during which it controls a closure of the first sealing element (26), and along a second angular sector during which the first sealing element (26) is held closed.

12. Valve according to Claim 11, **characterized in that** the first guide case (36) comprises a skirt (39) on which an undercut (40) is arranged, a first segment (41) of the skirt (39) which delimits the undercut (40) acts on the lifting bar (37) to open the first sealing element (26), a second segment (42) of the skirt (39) which delimits the undercut (40) acts on the shaft (38) to close the first sealing element (26), said undercut (40) comprising a clearance zone (44) from the lifting bar (37).

13. Valve according to any of Claims 6 or 7, **characterized in that** the second means (18) comprises a second guide case (50) on a skirt (51) in which at least one first recess (52) is provided, said first recess (52) authorizing a rotational movement of the second guide case (50) without driving the second sealing element (30) in rotation.

14. Valve according to any of Claims 6 or 13, **characterized in that** closure of the second sealing means (30) is achieved by a second spring means (57).
